# EUROPÄISCHE PATENTANMELDUNG

(11) **EP 2 947 275 A1**
(43) Veröffentlichungstag der Anmeldung: **25.11.2015**
(21) Anmeldenummer: 15174420.8
(22) Anmeldetag: 04.04.2012
(51) Int. Cl.: F01D 5/28, F01D 11/12

(54) **VERFAHREN ZUR HERSTELLUNG EINES EINLAUFBELAGS**

(62) Teilanmeldung aus: 12163066.9
(71) Anmelder: MTU Aero Engines AG, 80995 München (DE)
(72) Erfinder: Stiehler, Frank, 04924 Bad Liebenwerda (DE); Hertter, Manuel, 81243 München (DE)

(57) **Zusammenfassung**

Die Erfindung betrifft ein Verfahren zur Herstellung eines Einlaufbelags 20, 24, 32, 44 an einem Bauteil einer Strömungsmaschine, insbesondere einer Gasturbine, wobei der Einlaufbelag 20, 24, 32, 44 an dem Bauteil der Strömungsmaschine mittels eines kinetischen Kaltgas-Kompaktierveifahrens (K3) aufgebracht und hergestellt wird und das Bauteil ein statisches oder rotierendes Bauteil 16 der Strömungsmaschine ist. Die Erfindung betrifft weiterhin einen Einlaufbelag für ein statisches oder rotierendes Bauteil einer Strömungsmaschine und ein statisches oder rotierendes Bauteil einer Strömungsmaschine, insbesondere einer Gasturbine, mit mindestens einem Einlaufbelag 20, 24, 32, 44.

## Beschreibung

Die Erfindung betrifft ein Verfahren zur Herstellung eines Einlaufbelags an einem Bauteil einer Strömungsmaschine, insbesondere einer Gasturbine. Die Erfindung betrifft weiterhin einen entsprechend hergestellten Einlaufbelag sowie ein statisches oder rotierendes Bauteil einer Strömungsmaschine mit einem derartigen Einlaufbelag.

Einlaufbeläge kommen insbesondere bei so genannten Spalterhaltungssystemen in den Verdichter- und Turbinenkomponenten von Strömungsmaschinen zur Anwendung. Dabei haben die Einlaufbeläge die Aufgabe, einen Dichtspalt von rotierender Beschaufelung zu einem Gehäuse als auch die Spalte von einer stehenden Beschaufelung zu den drehenden Rotornaben minimal zu halten und damit ein stabiles Betriebsverhalten der Strömungsmaschine bei hohem Wirkungsgrad zu garantieren. Dabei weisen in üblicher Weise die rotierenden Bauteile der Turbine Dichtfinnen auf, die in bekannter Weise gegen die Einlaufbeläge bzw. Dichtungen einlaufen. Eine derartige wabenförmige Dichtung ist durch die WO 2004/061340 A1 offenbart. Es ist bekannt, Einlaufbeläge mit den entsprechenden Verdichter- oder Turbinenkomponeten mittels mechanischer Befestigungsmittel, mittels Löten, Schweißen oder Laserschweißen zu verbinden. Des Weiteren ist bekannt, die Einlaufbeläge mittels generativer Herstellungsverfahren oder thermischer Spritzverfahren direkt auf die Verdichter- oder Turbinenkomponeten aufzubringen. Nachteilig an den bekannten Befestigungs- oder Aufbringverfahren ist jedoch, dass nicht immer eine genügend hohe Verbindungsfestigkeit zwischen dem Einlaufbelag und der Verdichter- oder Turbinenkomponente erreicht werden kann.

Aufgabe der vorliegenden Erfindung ist es daher, ein Verfahren zur Herstellung eines Einlaufbelags an einem Bauteil einer Strömungsmaschine bereitzustellen, welches eine sichere Verbindung zwischen der Bauteiloberfläche und dem Einlaufbelag gewährleistet und zudem kostengünstig zur realisieren ist. Es ist weiterhin Aufgabe der vorliegenden Erfindung einen entsprechenden Einlaufbelag und ein Bauteil einer Strömungsmaschine mit einem derartigen Einlaufbelag bereitzustellen.

Die Aufgaben werden erfindungsgemäß durch ein Verfahren mit den Merkmalen des Patentanspruchs 1, einen Einlaufbelag mit den Merkmalen des Patentanspruchs 11 und ein Bauteil mit den Merkmalen des Patentanspruchs 13 gelöst. Vorteilhafte Ausgestaltungen der Erfindung sind in den jeweiligen Unteransprüchen angegeben, wobei vorteilhafte Ausgestaltungen des Verfahrens als vorteilhafte Ausgestaltungen des erfindungsgemäßen Einlaufbelags und des erfindungsgemäßen Bauteils anzusehen sind.

Ein erfindungsgemäßes Verfahren zur Herstellung eines Einlaufbelags an einem Bauteil einer Strömungsmaschine, insbesondere einer Gasturbine ist dadurch gekennzeichnet, dass der Einlaufbelag an dem Bauteil der Strömungsmaschine mittels eines kinetischen Kaltgas-Kompaktierverfahrens (K3) aufgebracht und hergestellt wird, wobei das Bauteil ein statisches oder rotierendes Bauteil der Strömungsmaschine ist. Durch die erfindungsgemäße Verwendung eines kinetischen Kaltgas-Kompaktierverfahrens wird eine sichere Fügeverbindung zwischen dem Bauteil der Strömungsmaschine und dem Einlaufbelag geschaffen. Durch die beim kinetischen Kaltgas-Kompaktierfahren verwendeten hohen Partikelgeschwindigkeiten entstehen nämlich sehr dichte Schichten, die sehr gut und fest an den entsprechenden Bauteiloberflächen haften. Zudem wird durch die Verwendung des kinetischen Kaltgas-Kompaktierverfahrens ein oftmals nicht erwünschter zu poröser Materialauftrag vermieden, wie er bei anderen thermischen Spritzverfahren, wie Plasmaspritzen, Flamm- und Hochgeschwindigkeitsflammsplitzen wegen der starken Verwirbelungen mit der Umgebungsluft bei dem Auftrag und der Herstellung von Einlaufbelägen resultieren kann. Bei den bei dem erfindungsgemäßen Verfahren verwendeten pulverförmigen Ausgangsmaterialien für die Herstellung der Einlaufbeläge handelt es sich um üblicherweise verwendete Materialien für Einlaufbeläge. Insbesondere werden geeignete Metallpulver oder Metallpulver/Keramikpulver-Mischungen verwendet. Insbesondere kommen zur Herstellung von Einlaufbelägen für Strömungsmaschinen Aluminiumlegierungen zum Einsatz. Des Weiteren können auch geeignete Kunststoffe verwendet werden. Zudem können diesen Basismaterialien inerte Füllstoffe aus leicht spaltbaren Materialien, wie Graphit, Bentonit oder hexagonales Bornitrid zugegeben werden. Auch andere geeignete Materialien oder Materialkombinationen sind denkbar, wobei diese allerdings zum Einsatz in dem kinetischen Kaltgas-Kompaktierverfahren verformbar sein müssen.

In weiteren vorteilhaften Ausgestaltungen des erfindungsgemäßen Verfahrens wird vor dem Auftrag des Einlaufbelags mindestens eine Haftschicht und/oder mindestens eine Wärmedämm- beziehungsweise Titanfeuerschutzschicht auf eine mit dem Einlaufbelag zu beschichtenden Oberfläche des statischen oder rotierenden Bauteils zur Ausbildung eines Verbundeinlaufbelags aufgebracht. Dabei kann die Haftschicht und/oder Wärmedämm- beziehungsweise Titanfeuerschutzschicht mittels eines thermischen Spritzverfahrens hergestellt werden. Insbesondere kann hierbei wiederum ein kinetischen Kaltgas-Kompaktierverfahren verwendet werden, wodurch vorteilhafterweise an einer Spritzvorrichtung die Herstellung des Verbundeinlaufbelags durchgeführt werden kann. Es ist aber auch möglich, dass die Haftschicht und/oder Wärmedämm- beziehungsweise Titanfeuerschutzschicht zunächst mittels eines Flamm-, Hochgeschwindigkeitsflamm-, Lichtbogen- und/oder Plasmaspritzens aufgebracht wird.

In weiteren vorteilhaften Ausgestaltungen des erfindungsgemäßen Verfahrens kann nach dem Auftrag des Einlaufbelags auf das statische oder rotierende Bauteil eine Struktur und/oder Kontur an und/oder in dem Einlaufbelag ausgebildet werden. Die Strukturen und/oder die Konturen dienen dabei zur Verbesserung der Aerodynamik des Einlaufbelages. Dabei können die Struktur und/oder Kontur mittels eines elektrochemischen Abtragverfahrens, insbesondere dem elektrochemischen Abtragen (ECM) oder der präzisen/gepulsten elektrochemischen Metallbearbeitung (PEM/PECM) oder eines mechanischen Abtragverfahrens, insbesondere Bohren oder Fräsen ausgebildet werden. Es ist aber auch möglich, dass der Auftrag des Einlaufbelags auf das statische oder rotierende Bauteil nach einem vorbestimmten Schichtmuster zur Ausbildung einer Struktur und/oder Kontur an und/oder in dem Einlaufbelag erfolgt. So kann zum Beispiel ein vorprogrammiertes Schichtmuster mittels einer entsprechenden rechnergesteuerten Auftrags- und Spritzvorrichtung zur Ausbildung des Einlaufbelags verwendet werden. Es ist aber auch möglich, nicht mit dem Einlaufbelag zu beschichtende Bereiche des statischen oder rotierenden Bauteils vor dem Auftrag des pulverförmigen Materials mittels geeigneter Materialien in bekannter Weise abzudecken. Die Struktur kann dabei honigwabenartig ausgebildet sein. Das Aufbringen und die Herstellung des Einlaufbelags mittels des kinetischen Kaltgas-Kompaktierverfahrens ist unabhängig von der Oberfläche des Bauteils auf die der Einlaufbelag aufgebracht wird. Dadurch können vorteilhafterweise oberflächenunabhängige Strukturen und/oder Konturen in und/oder an den Einlaufbelag eingearbeitet werden.

Des Weiteren ist das erfindungsgemäße Verfahren zur Herstellung des Einlaufbelags mittels des kinetischen Kaltgas-Kompaktierverfahrens kostengünstig und kann damit auch in der Serienproduktion ohne Weiteres eingesetzt werden.

Die Erfindung betrifft weiterhin einen Einlaufbelag für ein statisches oder rotierendes Bauteil einer Strömungsmaschine, insbesondere einer Gasturbine, hergestellt nach einem im Vorhergehenden beschriebenen Verfahren. Der erfindungsgemäße Einlaufbelag ist sicher mit der Bauteiloberfläche des statischen oder rotierenden Bauteils verbunden und kann kostengünstige hergestellt werden.

Des Weiteren betrifft die Erfindung ein statisches oder rotierendes Bauteil einer Strömungsmaschine, insbesondere einer Gasturbine, mit mindestens einem Einlaufbelag, der nach einem im Vorhergehenden beschriebenen Verfahren hergestellt ist. Durch die Verwendung des kinetischen Kaltgas-Kompaktierverfahrens zum Aufbringen und Herstellen des Einlaufbelags ergibt sich eine integrale Bauweise zwischen dem statischen oder rotierenden Bauteil und dem Einlaufbelag. Zudem wird eine sichere Fügeverbindung zwischen dem Einlaufbelag und dem Bauteil hergestellt.

Weitere Ausgestaltungen und Vorteile des erfindungsgemäßen Einlaufbelags und des erfindungsgemäßen Bauteils wurden im Vorhergehenden beschrieben.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen.

Dabei zeigen
Figur 1 eine schematische und geschnittene Ansicht eines erfindungsgemäßen Einlaufbelags innerhalb eines Bereichs einer Strömungsmaschine gemäß einer ersten Ausführungsform;
Figur 2 eine schematische und geschnittene Ansicht eines erfindungsgemäßen Einlaufbelags innerhalb eines Bereichs einer Strömungsmaschine gemäß einer zweiten Ausführungsform; und
Figur 3 einen schematisch dargestellten Verfahrensschritt zur Erzeugung einer Struktur in und/oder an dem erfindungsgemäßen Einlaufbelag.

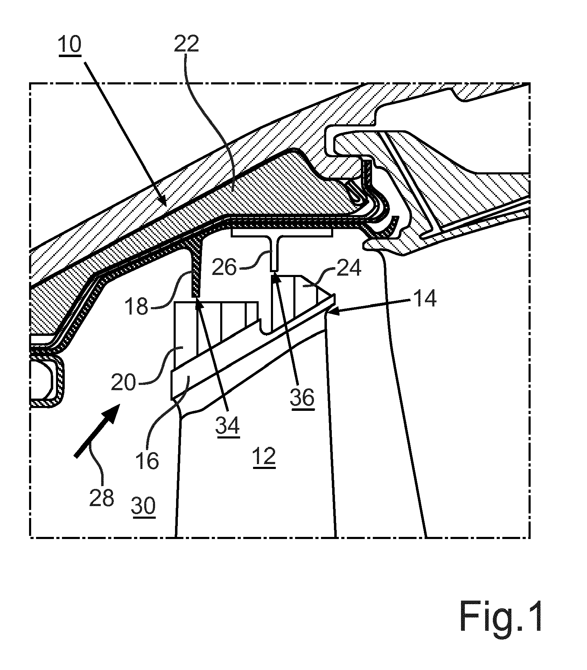

Die in Figur 1 dargestellten Einlaufbeläge 20, 24 sind Teil eines Dichtungssystem 10 als Bestandteil einer Niederdruckgasturbine. Man erkennt, dass das Dichtungssystem 10 in einem Ringraum 30 zwischen einer strömungsbegrenzenden Wand 22 der Niederdruckgasturbine und einer Laufschaufelreihe umfassend mehrere Laufschaufeln 12 bzw. einem an einer Laufschaufelspitze 14 angeordneten äußeren Deckband 16 angeordnet ist. Das Dichtungssystem 10 umfasst dabei zwei Dichtstellen 34, 36, wobei die zweite Dichtstelle 36 in Strömungsrichtung 28 hinter der ersten Dichtstelle 34 angeordnet ist. Die Dichtstellen 34, 36 bestehen dabei aus jeweils einem an dem äußeren Deckband 16 angeordneten Einlaufbeläge 20, 24 und aus jeweils einer dem jeweiligen Einlaufbelag 20, 24 gegenüberliegender und an der Innenseite der Wand 22 angeordneter Dichtspitze 18, 26. Zudem sind die Einlaufbeläge 20, 24 in Strömungsrichtung 28 hintereinander angeordnet. Die Einlaufbeläge 20, 24 sind dabei auf die entsprechenden Oberflächen des äußeren Deckbandes 16 mittels eines kinetischen Kaltgas-Kompaktierverfahrens (K3) aufgebracht und hergestellt worden. In dem dargestellten Ausführungsbeispiel weisen die Einlaufbeläge 20, 24 eine Wabenstruktur auf, die nach dem Auftrag der Einlaufbeläge 20, 24 in diese eingearbeitet worden sind. Die Struktur und/oder Kontur kann dabei mittels eines elektrochemischen Abtragsverfahren, insbesondere dem elektrochemisches Abtragen (ECM) oder der präzisen/gepulsten elektrochemischen Metallbearbeitung (PEM/PECM) oder eines mechanischen Abtragverfahrens, insbesondere Bohren oder Fräsen ausgebildet werden. Es ist aber auch möglich, dass der Auftrag des Einlaufbelags auf das statische oder rotierende Bauteil nach einem vorbestimmten Schichtmuster zur Ausbildung der Struktur und/oder Kontur an und/oder in dem Einlaufbelag erfolgt. So kann zum Beispiel ein vorprogrammiertes Schichtmuster mittels einer entsprechenden rechnergesteuerten Auftragsvorrichtung zur Ausbildung des Einlaufbelags verwendet werden. Es ist aber auch möglich, nicht mit dem Einlaufbelag zu beschichtende Bereiche des statischen oder rotierenden Bauteils der Strömungsmaschine mittels geeigneter Materialien in bekannter Weise abzudecken.

Die Einlaufbeläge 20, 24 können aus üblicherweise verwendeten Materialien bestehen. Hierzu ist eine Vielzahl von Materialien bekannt, deren Verwendung sich nach den vorgegebenen Einsatzbereichen richtet. Als pulverförmige Ausgangsmaterialien für die herzustellenden Einlaufbeläge kommen insbesondere metallische Werkstoffe zum Einsatz. Zum Teil können diese auch mit keramischen Werkstoffen kombiniert werden, wobei diese insbesondere als Inertfüllstoffe für den Einlaufbelag dienen. Als metallische Werkstoffe kommen insbesondere Aluminiumlegierungen zum Einsatz. Es ist aber auch möglich, dass entsprechend geeignete Kunststoffe, die insbesondere den vorherrschenden Einsatztemperaturen in den verschiedenen Bereichen der Strömungsmaschine standhalten müssen, verwendet werden. Des Weiteren können in die metallischen Spritzschichten des Einlaufbelags inerte Füllstoffe aus leicht spaltbaren Materialien wie zum Beispiel Grafit, Bentonit, hexagonales Bornitrid, Fasern oder Bestandteile aus Polyester integriert werden. Dadurch lässt sich ein entsprechend einfaches und materialschonendes Einlaufen realisieren.

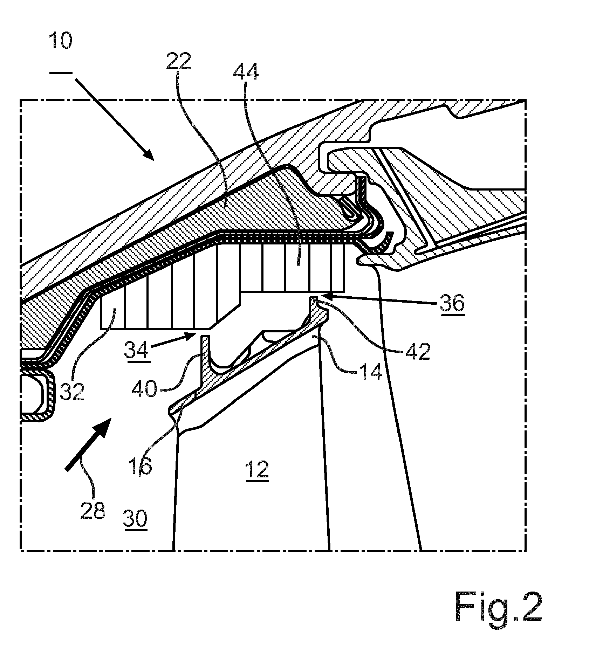

Figur 2 zeigt eine abschnittsweise, schematische und teilweise geschnittene Ansicht eines Dichtungssystems 10 gemäß einer zweiten Ausführungsform. Man erkennt, dass das Dichtungssystem 10 wiederum in dem Ringraum 30 zwischen der strömungsbegrenzenden Wand 22 einer Niederdruckgasturbine und einer Laufschaufelreihe umfassend mehrere Laufschaufeln 12 bzw. dem an der Laufschaufelspitze 14 angeordneten äußeren Deckband 16 angeordnet ist. Das Dichtungssystem 10 umfasst auch bei diesem Ausführungsbeispiel zwei Dichtstellen 34, 36, wobei die zweite Dichtstelle 36 in Strömungsrichtung 28 hinter der ersten Dichtstelle 34 angeordnet ist. Im Gegensatz zu dem in Figur 1 dargestellten ersten Ausführungsform des Dichtungssystems umfasst die erste Dichtstelle 34 eine an dem äußeren Deckband 16 angeordnete Dichtspitze 40, wobei die Dichtspitze 40 einem an einer Innenseite der strömungsbegrenzenden Wand 22 angeordneten Einlaufbelag 32 gegenüberliegend angeordnet ist. Die zweite Dichtstelle 36 weist an dem äußeren Deckband 16 eine Dichtspitze 42 auf, die einem an der Innenseite der Wand 22 angeordneten Einlaufbelag 44 gegenüberliegend angeordnet ist.

Die in den Ausführungsbeispielen dargestellten Einlaufbeläge sind nicht auf den Niederdruckgasturbinenbereich beschränkt. Vielmehr können sie auch im Verdichterbereich zur Auskleidung der entsprechenden, den Laufschaufeln des Verdichters gegenüberliegenden Innenseiten des Verdichtergehäuses zum Einsatz kommen.

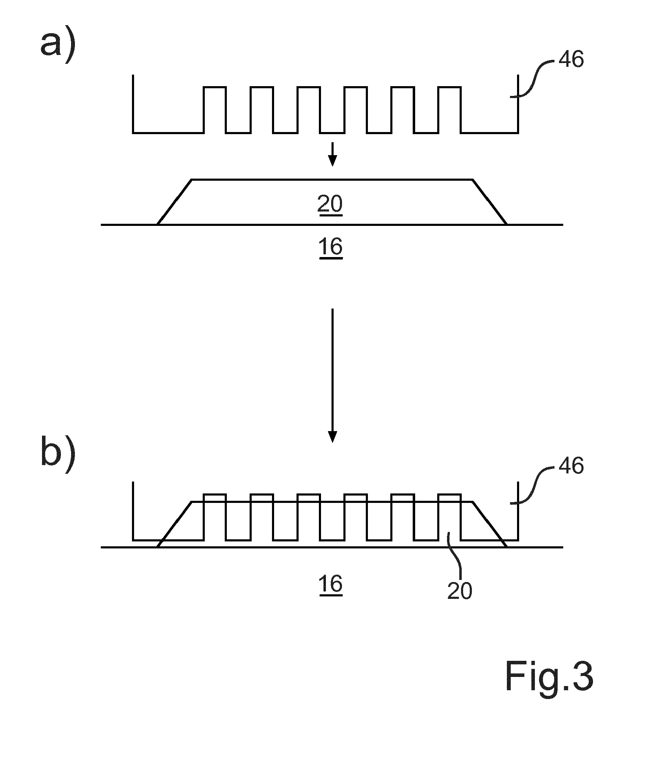

Figur 3 zeigt einen durch das kinetische Kaltgas-Kompaktierverfahren aufgetragenen und hergestellten Einlaufbelag 20. Der Auftrag des Einlaufbelags 20 erfolgte dabei auf ein rotierendes Bauteil einer Strömungsmaschine, nämlich dem äußeren Deckband 16 der Laufschaufel 12 einer Niederdruckgasturbine. Man erkennt, dass ein Werkzeug 46 für den elektrochemischen Abtrag, insbesondere eine entsprechende Elektrodenanordnung auf den Einlaufbelag 20 abgesenkt wird (Teilschritte a) und b)). Die Struktur und Formgebung des Werkzeugs 46 ist auf die in dem Einlaufbelag 20 herzustellende Struktur abgestimmt. In Figur 3b ist die Erzeugung der genannten Struktur in dem Einlaufbelag 20 schematisch dargestellt. Man erkennt, dass das Werkzeug 46 auf den Einlaufbelag 20 abgesenkt wird und in diesen eindringt. Es ist hier beispielhaft das so genannte elektrochemische Senken dargestellt. Dabei wird beim elektrochemischen Senken in der Regel mit einer Elektrode die Oberfläche des Werkstücks, in diesem Fall des Einlaufbelags 20 bearbeitet, wobei durch elektrochemische Reaktion des Werkstücks beziehungsweise des Einlaufbelags 20 mit dem sich zwischen dem Einlaufbelag 20 und dem Werkzeug 46 befindlichen Elektrolyt ein Abtragen von Material am Einlaufbelag 20 erfolgt. Bei diesen so genannten ECM-, PEM- oder PECM-Verfahren ist die Breite des Arbeitsspalts zwischen der Elektrode beziehungsweise dem Werkzeug 46 und dem Werkstück beziehungsweise dem Einlaufbelag 20 von wesentlicher Bedeutung. Dabei kann zum Erzeugen feinerer Strukturen und Formen der Abstand auf Größen im Bereich von 10 bis 50 µm und darunter abgesenkt werden. Um einen entsprechend genügend großen Austausch des Elektrolyten bei derart geringen Abständen gewährleisten zu können, wird hierbei üblicherweise das Werkzeug 46 beziehungsweise die Elektrodenanordnung in Vibration versetzt.

Nach einer entsprechenden Strukturierung und/oder Konturierung des Einlaufbelags 20 wird das Werkzeug 46 wieder von dem Einlaufbelag 20 entfernt.

## Patentansprüche

1. Verfahren zur Herstellung eines Einlaufbelags (20, 24, 32, 44) an einem Bauteil einer Strömungsmaschine, **dadurch gekennzeichnet, dass**
der Einlaufbelag (20, 24, 32, 44) an dem Bauteil der Strömungsmaschine mittels eines kinetischen Kaltgas-Kompaktierverfahrens (K3) aufgebracht und hergestellt wird,
- wobei das Bauteil ein statisches oder rotierendes Bauteil (16) der Strömungsmaschine ist
und
- durch den Auftrag des Einlaufbelags (20, 24, 32, 44) auf das statische oder rotierende Bauteil (16) oder nach dem Auftrag des Einlaufbelages eine Struktur und/oder Kontur an und/oder in dem Einlaufbelag (20, 24, 32, 44) ausgebildet wird.

2. Verfahren nach Anspruch 1, **dadurch gekennzeichnet, dass** die Struktur und/oder Kontur hergestellt wird mittels
- eines elektrochemischen Abtragverfahrens,
oder
- eines mechanischen Abtragverfahrens,
oder
- dass der Auftrag des Einlaufbelags auf das statische oder rotierende Bauteil nach einem vorbestimmten Schichtmuster zur Ausbildung der Struktur und/oder Kontur an und/oder in dem Einlaufbelag erfolgt,
oder
- dass nicht mit dem Einlaufbelag zu beschichtende Bereiche des statischen oder rotierenden Bauteils der Strömungsmaschine mittels geeigneter Materialien in bekannter Weise abgedeckt werden.

3. Verfahren nach Anspruch 2, **dadurch gekennzeichnet, dass**
das elektrochemische Abtragverfahren ein elektrochemisches Abtragen (ECM) oder die präzise/gepulste elektrochemischen Metallbearbeitung (PEM/PECM) ist.

4. Verfahren nach Anspruch 2, **dadurch gekennzeichnet, dass** das mechanische Abtragverfahrens als Bohren oder Fräsen ausgebildet ist.

5. Verfahren nach Anspruch 2, **dadurch gekennzeichnet, dass** der Auftrag des Einlaufbelags auf das statische oder rotierende Bauteil nach dem vorbestimmten Schichtmuster zur Ausbildung der Struktur und/oder Kontur an und/oder in dem Einlaufbelag über ein vorprogrammiertes Schichtmuster mittels einer entsprechenden rechnergesteuerten Auftragsvorrichtung zur Ausbildung des Einlaufbelags erfolgt.

6. Verfahren nach einem der vorhergehenden Ansprüche, **dadurch gekennzeichnet, dass** vor dem Auftrag des Einlaufbelags (20, 24, 32, 44) mindestens eine Haftschicht und/oder mindestens eine Wärmedämm- bzw. Titanfeuerschutzschicht auf eine mit dem Einlaufbelag (20, 24, 32, 44) zu beschichtenden Oberfläche des statischen oder rotierenden Bauteils (16) zur Ausbildung eines Verbundeinlaufbelags aufgebracht wird.

7. Verfahren nach Anspruch 6, **dadurch gekennzeichnet, dass** die Haftschicht und/oder Wärmedämm- bzw. Titanfeuerschutzschicht mittels eines thermischen Spritzverfahrens hergestellt wird.

8. Verfahren nach Anspruch 6, **dadurch gekennzeichnet, dass** die Haftschicht und/oder Wärmedämm- bzw. Titanfeuerschutzschicht mittels eines kinetischen Kaltgas-Kompaktierverfahrens (K3) hergestellt wird.

9. Verfahren nach einem der vorhergehenden Ansprüche, **dadurch gekennzeichnet, dass** nach dem Auftrag des Einlaufbelags (20, 24, 32, 44) auf das statische oder rotierende Bauteil (16) eine Struktur und/oder Kontur an und/oder in dem Einlaufbelag (20, 24, 32, 44) ausgebildet wird.

10. Verfahren nach Anspruch 9, **dadurch gekennzeichnet, dass** die Struktur und/oder Kontur mittels eines elektrochemischen Abtragsverfahren, insbesondere dem elektrochemischen Abtragen (ECM) oder der präzisen/gepulsten elektrochemischen Metallbearbeitung (PEM/PECM) oder eines mechanischen Abtragverfahrens, insbesondere Bohren oder Fräsen ausgebildet wird.

11. Einlaufbelag für ein statisches oder rotierendes Bauteil einer Strömungsmaschine, insbesondere einer Gasturbine, hergestellt nach einem Verfahren gemäß einem der Ansprüche 1 bis 10.

12. Statisches oder rotierendes Bauteil einer Strömungsmaschine, insbesondere einer Gasturbine, mit mindestens einem Einlaufbelag (20, 24, 32, 44) hergestellt nach einem Verfahren gemäß einem der Ansprüche 1 bis 10.

13. Bauteil nach Anspruch 12, **dadurch gekennzeichnet, dass** das Bauteil eine Laufschaufelspitze, ein äußeres Deckband (16) einer Laufschaufel (12) oder Laufschaufelreihe oder das Gehäuse einer Verdichter- oder Turbinenkomponente ist.
